# EUROPEAN PATENT APPLICATION

(11) **EP 0 739 702 A1**
(43) Date of publication of application: **30.10.1996**
(21) Application number: 96302960.8
(22) Date of filing: 26.04.1996
(51) Int. Cl.: B29C 45/28

(54) **Method and apparatus for molding thin-walled parts**

(30) Priority: 27.04.1995 US 429995
(71) Applicant: EASTMAN KODAK COMPANY, Rochester, New York 14650-2201 (US)
(72) Inventor: Chen, Kin-Chan, Rochester, New York 14650-2201 (US); Dutko, Bernard Peter, Rochester, New York 14650-2201 (US); Radzio, Carl E., Rochester, New York 14650-2201 (US)
(74) Representative: Jones, Alan John

(57) **Abstract**

A method and apparatus for making high speed injection molded ultra-thin walled plastic parts which are scarless at the gate area so that molten mold material fills a hot runner system 2, and is kept under pressure. The mold material fills the channel 4 and the recessed area 9. A core pin is initially kept at a position such that the central cylindrical body portion 8b of the core pin 8 seals off, or blocks,the mold cavity 10 at the annular gate 9a. To fill the mold cavity 10, hydraulic pressure is applied to the proximal end of the core pin, and the core pin 8 is depressed a predetermined distance. The pin 8 is held in the depressed position such that the tapered end portion 8c is positioned to open the gate 9a and allow molten molding material to flow under pressure into the molding cavity 10. At predetermined time sufficient for the mold cavity 10 to be filled with molten mold material, the hydraulic pressure on the core pin 8 is switched, and the core pin 8 returns to a predetermined position within the channel 4, such that the central cylindrical body portion 8b of the core pin 8 is in contact with and seals off the annular gate 9a. In this way, the core pin 8 creates a scarless opening 9b at the gate 9a. The mold half blocks 15 and 16 are then separated by any mechanical means to reveal the molded part 17 which is preferably retained in either mold half block. The part is then mechanically and preferably automatically removed from the mold.

## Description

The present invention relates to the manufacturing and machining of ultra-thin parts; in particular, the injection molding of ultra-thin parts which require a precision hole located at the gate area.

Precision parts often require a perfectly smooth surface. Injection molding plastic parts without the presence of mold lines, or gate scars is difficult, but often required for certain uses. When the function of an injection molded part requires a precision opening, or hole, in the part, such holes or other openings may be physically cut or punched out of the part after the part is removed from the mold. After punching out the hole, polishing or trimming is often required for an acceptable finished part. In addition, some parts may either be too thick or too thin to make precision punching viable. For thick parts, as well as thin parts (parts having thicknesses about 1/32 of an inch, or 0.8 mm), depending upon the tolerances required of the finished part, molding openings into the part often reduces or eliminates the need for trimming and polishing steps after hole punching.

Methods for molding parts with holes are disclosed in US-A-4,412,805 and US-A-4,439,132. In these patents, a part with a centrally located hole is molded with a die plug that is part of the lower mold half. In US-A-4,340,353 a method for molding record discs with molten materials injected into the mold at an axis coincident with the central aperture is disclosed. US-A-5,391,579 discloses another method for injection molding record discs which implements an axially movable valve. US-A-4,394,117 discloses creating apertures in molded parts. After injecting material through a gate located near the center, a sleeve component is engaged to interrupt molten material flow and leave a hole produced. Injection molding is therefore a widely practiced method of molding openings into plastic parts.

However, for certain applications, thin-walled or ultra-thin parts may be desired. For the purposes of the present invention, ultra-thin parts are understood to have thicknesses of less than about 0.6 mm. Those skilled in this art usually fabricate ultra-thin plastic parts by punching the parts from a sheet of ultra-thin plastic. Similarly, if a hole or other shape must be made in an ultra-thin part, the hole is punched, cut or otherwise physically made in the ultra-thin sheet material used to make the part. However, it is very difficult and often impossible to machine ultra-thin materials to a precise tolerance by methods such as punching. If the ultra-thin plastic material is brittle, the parts often break or tear irregularly during punching or cutting attempts. If the ultra-thin plastic is excessively pliable, the sheet is deformed during the process and the punched or cut opening lacks the required precision for certain specifications due to unavoidable irregularities.

Some injection molding machines that are commercially available purport to make ultra-thin plastic parts (for example 0.6mm wall thicknesses). Such machines, however, leave a gate scar of at least up to .08mm. Therefore, when the application for an ultra-thin walled part requires no gate scar, neither punching nor conventional injection molding can produce an acceptable result. The precision manufacturing difficulties are further complicated when a required precision opening must be made at the gate area of an ultra-thin part.

The present invention is directed to a method and apparatus for molding precise and scarless openings at the gate area into molded, ultra-thin walled parts. Surface irregularities, nicks, scars or other cutting defects of molded ultra-thin walled parts are eliminated as well as additional processing steps (for example polishing, trimming, and so forth) through the use of the injection molding method and apparatus of the present invention.

According to the method and apparatus of the present invention, an ultra-thin walled part having a scarless opening at the gate area is formed by providing a mold with a hot runner system attached to a high speed injection molding machine. The runner system has a body member having a channel for passing molten materials. The channel has an inlet end, an outlet end, and a ring gate surrounding the outlet through which the molten material flows into a mold cavity. The channel has a recessed area near the outlet end where the channel diameter narrows. The runner system further includes a core pin which is movably mounted in the channel, and extends from the outlet end of the channel to a distance such that the tip of the core pin extends perpendicularly through the mold cavity to form an opening in the molded ultra-thin walled part. The core pin is displaceable between a first position and a second position. In the first position, the cylindrical body of the core pin tip is in the recessed area of the channel, adjacent the annular gate of the molding cavity thereby restricting molten material flow through the outlet end. In the second position, the core pin is depressed to a position such that the molten material, when present, flows from the channel through the annular gate and into the mold cavity. Molding material is provided to the injection molding machine and heated to a temperature sufficient to make the molding material molten. Molten material is then injected under pressure and at high speed into the inlet of the channel. The core pin is oriented into the second position thereby permitting molten material flow from the channel through the annular gate and into the mold cavity. The molten material is then injected at high speed into the molding cavity. The core pin is then repositioned or retracted to the first position thereby restricting the flow of molten material from the outlet end of the channel into the mold cavity, scarlessly molding an opening at the gate area into the ultra-thin walled part.

Further objects and advantages of the invention will become apparent from the following description taken together with the accompanying drawings.

The accompanying drawings illustrate the invention. In such drawings:
Fig. 1 is a cross-sectional side view of the molding system and injection nozzle in the body member containing the core pin valve member;
Fig. 2 is a cross-sectional side view of the mold with the core pin valve member in the first or "down" position allowing the flow of material into the mold;
Fig. 3 is a cross-sectional side view of the mold with the core pin valve member in the "up" position restricting further material from flowing into the mold cavity;
Fig. 4 is a plan view of the molded ultra-thin part at rest in the opened mold half; and
Fig. 5 is a cross-sectional side view of the part at rest in the opened mold half.

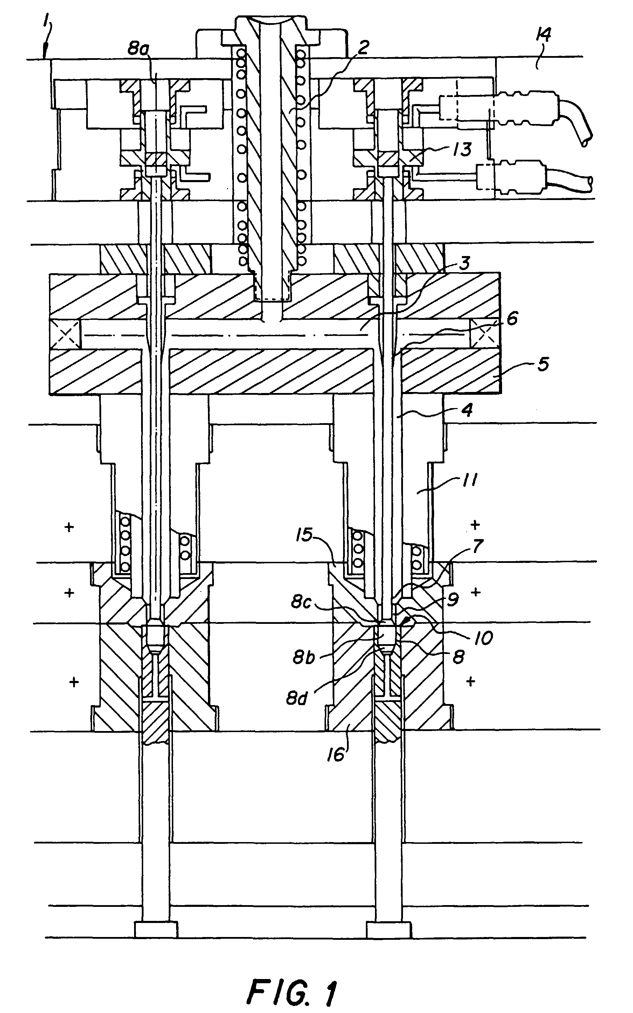

The present invention will now be described in detail with reference to the drawings. Fig. 1 shows a cross sectional side view of the molding system. The injection mold 1 is attached by a bolting means (not shown) to a high speed injection molding machine. The hot runner system 2, is a multichambered hydraulically actuated valve gated injection molding system. The runner system has a heated chamber 3 and channel 4. The heated chamber 3 has a central bore of a predetermined diameter. The channel 4 extends from a heated manifold 5. The manifold 5 is attached to the injection mold 1. The channel 4 has a predetermined volume. The channel 4 has an inlet or proximal end 6, and an outlet or terminal end 7. A core pin 8 is disposed throughout the length of, and centrally located within, the channel 4. The channel 4 narrows to a region of smaller diameter at recessed area 9. One end of the core pin 8 is attached at one end to an automated hydraulic piston means 13 which moves the core pin 8 slidably along its axis 8a. The other end of core pin 8 extends through the nozzle 11 of the hot runner system 2.

In Fig. 1, the core pin 8 is located in the "up" or initial position. The tip of the valve pin 8 extends through the gate (not shown) of molding cavity 10. In this position, the system is closed and there can be no molten material flow from the injection molding system 2 into the molding cavity 10 as the tip of the core pin "blocks" the flow of molten material into the mold cavity.

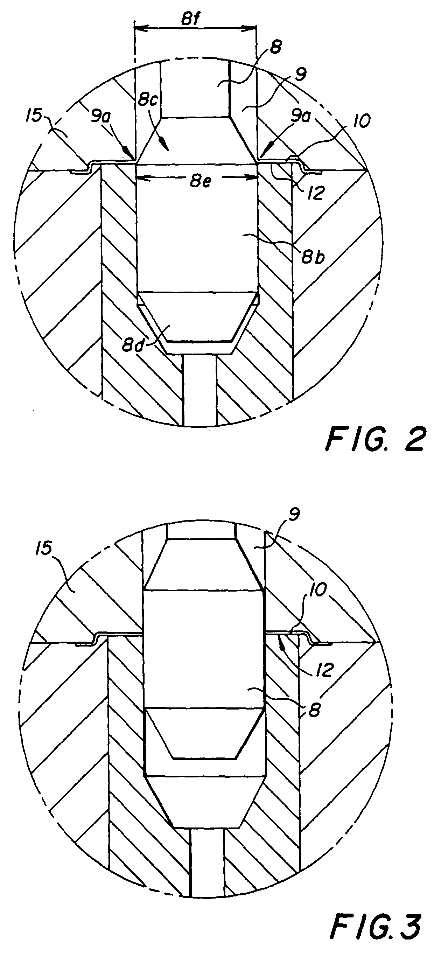

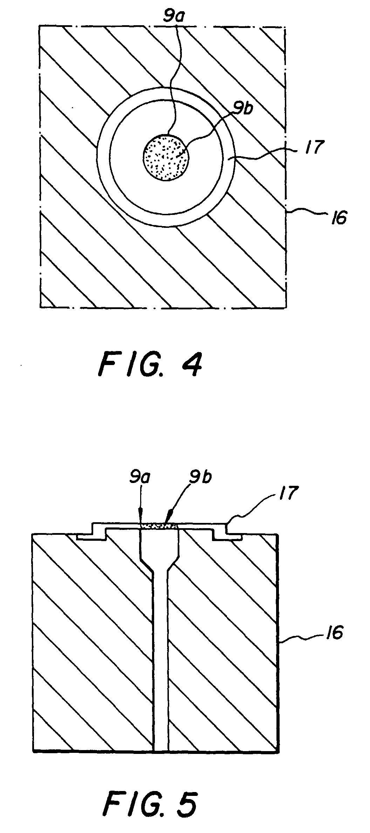

With reference to Fig. 2, the core pin 8 has a central cylindrical body portion 8b with tapered end portions 8c, 8d at opposite ends. The diameter of the central body 8e is only slightly smaller than the diameter of the channel 8f. In the preferred embodiment, the central cylindrical body portion 8b of the core pin tip has a diameter nearly equal to the annular gate 9a; having just enough room therebetween to slidably move. The distance therebetween is preferably less than about 0.005mm. When the central body portion of the core pin 8b is positioned adjacent to this annular gate 9a, the mold cavity is sealed closed. When the core pin is in its depressed or "down" position, the tapered end portion 8c is tapered enough to permit molten plastic to enter the annular gate 9a and fill the mold cavity 10. Fig. 2 shows the core pin depressed into the "down" or flow position. In this position, the core pin has been lowered or depressed via hydraulic piston means 13 to a predetermined distance by actuating hydraulic pressure to move the hydraulic piston means 13 down, lowering the core pin 8 and opening the gate 9a of the molding cavity 10. In a preferred embodiment, the hydraulic piston means 13 automatically depresses the core pin 8 to a position such that the bottom of the recess area 9 is even with the lower wall 12 of the molding cavity 10. When the core pin 8 is in its "down" position, molten material flows under predetermined and specified temperature, pressure and speed into the molding cavity 10 (which has a calculated volume) for a specified and predetermined amount of time. When the core pin 8 is retracted to its "up" position (Fig. 3), material flow into the mold cavity 10 is terminated, the core pin 8 scarlessly forming a precision opening 9b in the part 17 at the annular gate area 9a. The escape of material from the mold cavity 10 is prevented since core pin 8 seals off the annular gate 9a. In addition, the core pin 8 simultaneously seals off the recessed area 9, thereby containing the molten fluid in channel 4 while the material in molding cavity 10 solidifies. At a specified time when the solidified material is at the desired temperature, the upper mold cavity block 15 is separated from the lower mold cavity block 16 and the core pin 8 is removed from the mold cavity hole, leaving a scarless precision gate opening 9b in the solidified part 17 selectively retained on the lower mold cavity block 16, see Figs. 4 and 5. It is understood that the part may be retained on either mold half as desired. The part 17 is ejected from the mold half by mechanical or robotic means as would be readily apparent to one skilled in the field.

The core pin 8 may be formed of tool steel AISI-S7 or AISI-A2, and is preferably formed from tool steel AISI-S7, and is preferably driven by a hydraulic means, but may be driven by pneumatic, mechanical, manual, or electrical actuating mechanism 13, as may be desired, seated in the top plate 14. (See Fig. 1).

The chamber 3 is heated by an electric heating element (not shown) which may be cast or pressed into the manifold and which receives power from a source through terminals (not shown). The heat is controlled to maintain the molten material at a temperature sufficient to inject the material at high speed into the mold.

Preferably, in operation, when the core pin 8 is in its raised position it keeps the molten mold material sealed in the outlet 7 of channel 4. The material injected into the mold cavity 10 is allowed to cool, solidify and is then ejected from the injection mold apparatus 1. Thereafter, the molten mold material retained in outlet 7 is ready for injection into the mold cavity 10 to repeat the molding process.

The molding material is preferably introduced to the injection molding machine as a pellet, powder, granule or other solid form, with a pellet form being most preferred. The material may be any thermoplastic depending only upon the constraints of the molding system, which may be significant. It was discovered that to accomplish filling the mold to form an ultra-thin walled part, the plastic material in the molten state preferably displays non-Newtonian flow properties. It was experimentally determined that minimized manifold volume and maximized initial injection speed are preferred conditions. Therefore, the molten material may be any thermoplastic material which may be made to flow at the high speeds required by the molding system and method of the present invention. The material may be in "pure" form; made entirely of one component, or may be made of a combination or mixture of many different components. The molten material may be selected from any thermoplastic material, depending upon the intended use for the finished part. For molding ultra-thin walled parts, according to the method of the present invention, plastics such as polystyrene are preferred, with Novacor™ 3350 polystyrene (Novacor Chemicals Inc., Leominster, MA) being most preferred.

The injection molding method and system of the present invention is designed to mold ultra-thin walled parts with scarless openings at the gate area. The parts preferably have thicknesses of from about 0.05mm to about 0.5mm, and more preferably from about 0.lmm to about 0.4mm, while having no perceptible gate scars on the part surface or at the gate area.

The openings molded into the ultra-thin walled parts of the present invention are preferably made at the annular gate area. The injection molding system injects molten material at sufficiently high velocity to completely fill the mold. The core pin valve member then displaces molten material at the gate area to form a scarless gate; a gate area free from nicks, or scars. Imperfections of about .013mm or less are considered to be "scarless".

The molten material is injected into the mold at a rate of from about 600 to about 1500mm/sec., more preferably about 800 to about 1250 mm/sec., and most preferably about 1000mm/sec. The injection velocity is achieved by cooperatively designing the mold volume to be filled with molten material, the volume and diameter of the recess area in the core pin valve member, the volume of the injection molding chamber and channel holding the molten material, and the pressure supplied to the system.

The high speed injection molding machines incorporated in the present invention may be selected from a variety of commercially available high speed injection molding machines able to deliver molten plastic at a desired speed to fill a mold of desired dimensions, as would be apparent to one skilled in the injection molding field.

In operation, molten mold material fills the hot runner system 2, and is kept under pressure. The mold material fills the channel 4 and the recessed area 9. The core pin 8 is initially kept at a position such that the central cylindrical body portion 8b of the core pin 8 seals off, or blocks the mold cavity 10 at the annular gate 9a and retains the molten mold material in the recessed area 9 of channel 4. To fill the mold cavity 10, hydraulic pressure is applied to the proximal end of the core pin 8, and the core pin is depressed a predetermined distance to open the gate 9a. The pin 8 is held in the depressed position such that the tapered end portion 8c is positioned to allow molten molding material to flow under pressure through gate 9a and into the molding cavity 10. At predetermined time sufficient for the mold cavity 10 to be filled with molten mold material, the hydraulic pressure on the core pin 8 is released, and the core pin 8 returns to a predetermined position within the channel 4, such that the central cylindrical body portion 8b of the core pin 8 is in contact with the annular gate 9a. So, the core pin 8 simultaneously seals off the gate 9a and the recessed portion 9 of channel 4. In this way, the core pin 8 has created a scarless opening at the gate 9a. The mold half blocks 15 and 16 are then separated by suitable mechanical means to reveal the molded part 17 which may be preferably retained in either mold half block. The part 17 is then mechanically and preferably automatically removed from the mold 1 using any means which would be readily apparent to one skilled in the art.

In one preferred embodiment, the channel 4 of the body member of the hot runner system 2 must be heated to a temperature sufficient to maintain the molding material at temperatures that enable the material to be injected to fill known mold volumes at high speed. For example, it was discovered that to accurately mold ultra-thin walled parts with thicknesses of from about .01 mm to .02 mm, made from thermoplastic materials such as polystyrene, the material had to be maintained at its optimum melt temperature of about 500°F. The injection molding machine then applied an injection pressure of 150 bar, such that the mold was filled at an injection rate of about 1000mm/sec.

### Parts List

1 - Injection Mold
2 - Hot Runner System
3 - Chamber
4 - Channel
5 - Hot Manifold
6 - Inlet
7 - Outlet
8 - Valve Pin
8a- Core Pin Axis
8b- Control Cylindrical Body (Core Pin)
8c- Tapered End Portion (Upper)
8d- Tapered End Portion (Lower)
8e- Central Body Diameter
8f- Channel Diameter
9 - Recess/Groove Area
9a- Annular Gate
9b- Precision Opening
10- Ultra Thin Walled Molding Cavity
11- Nozzle
12- Lower Wall of Molded Cavity
13- Hydraulic Piston
14- Top Plate
15- Upper Cavity Block
16- Lower Cavity Block
17- Part

## Claims

1. In a method for forming an ultra-thin walled part formed by providing a high speed injection molding machine with a hot runner system (2) mold, the runner system having a body member with a channel (4) for carrying molten material, the channel having an inlet end (6) and an outlet end (7), and a recessed area surrounding the outlet end through which the molten material flows from the channel into an ultra-thin walled molding cavity (10), the runner system further including a core pin (8) around which the molten material flows and being movably mounted in the channel and extending from the outlet end of the channel to a distance such that a portion of the core pin extends perpendicularly through the ultra-thin walled molding cavity to form an opening in the molded ultra-thin walled part, the core pin being displaceable between a first position wherein the core pin is positioned within the channel to restrict the flow of the molten material through the outlet end, and a second position wherein the core pin is partially displaced from the channel and the recessed area of the channel, such that the core pin opens a path to the ultra-thin walled molding cavity thereby forming a flow path between the outlet end of the channel and the ultra-thin walled molding cavity; the improvement which comprises:
injecting at high speed the molten material from the channel through an annular gate (9a) to fill an ultra-thin walled molding cavity having uniform wall thicknesses in the range of from about 0.05 mm to about 0.5 mm; and retracting the core pin in an axial direction to form a scarless annulus at the gate area of the ultra-thin walled molded part.

2. The method of claim 1 wherein the core pin moving from its first position to its second position simultaneously closes off molten fluid flow into the ultra-thin molding cavity while scarlessly forming an opening at the annular gate.

3. A high speed injection molding machine having a mold for molding ultra-thin walled parts having a scarless opening at the gate area comprising:
an ultra-thin walled molding cavity; and a hot runner having a heated channel for carrying molten molding material, the heated channel having an inlet end, an outlet end, a gate located between the outlet end and the ultra-thin walled molding cavity through which the molten material flows from the channel into the ultra-thin walled molding cavity; a core pin having a shaft with a terminal end around which the molten material flows and being movably mounted in the channel, the core pin being displaceable between a first position wherein the core pin is positioned within the channel to seal off flow of the molten material through the outlet end, and close off the gate,and a second position wherein the core pin is partially displaced from the channel to open the outlet end of the channel and open the gate, thereby establishing a flow path between the outlet end of the channel and the ultra-thin walled molding cavity.

4. The molding machine of claim 3 wherein the core pin moving from its first position to its second position simultaneously closes off molten fluid flow into the ultra-thin molding cavity while scarlessly forming an opening at the annular gate. or claim 4

5. The molding machine of claim 3/ further comprising an hydraulic positioning means for orienting the core pin in the first position and second positions.

6. The molding machine of claim 3, 4 or 5 wherein the injection means for injecting the molten material into the inlet of the channel and into the ultra-thin walled molding cavity is a high speed injection molding means.

7. The molding machine of any one of claims 3 to 6 wherein the thickness of the ultra-thin walled molding cavity used to mold the ultra-thin walled part is from about 0.05 to about 0.5mm.

8. The molding machine of claim 7 wherein the thickness of ultra-thin walled molding cavity used to mold the ultra-thin walled part is from about 0.1 to about 0.4mm.

9. An ultra-thin walled high speed injection molded part having a scarless opening at the annular gate area, having a thickness of from about 0.01 mm to about 0.5 mm, and having a uniform thickness throughout the molded part within a deviation of less than about +/-0.00127 mm.

10. A high speed hot runner injection molding apparatus comprising:
a heated runner enclosing a chamber with an inlet end and an discharge end for carrying molten molding material; a molten molding manifold located at the inlet end of the chamber; a discharge opening at the discharge end of the chamber; an ultra-thin walled molding cavity having a gate disposed proximate the discharge end of the chamber; a core pin disposed inside the chamber and having a first sealing surface for sealing the discharge opening of the chamber and a second sealing surface for sealing the gate; and a piston coupled to the core pin for moving the core pin to a first position for sealing the chamber and the gate and to a second position to open the chamber and the gate so that molding material in the chamber is injected into the ultra-thin walled molding cavity.
